# EUROPÄISCHE PATENTANMELDUNG

(11) **EP 4 632 204 A1**
(43) Veröffentlichungstag der Anmeldung: **15.10.2025**
(21) Anmeldenummer: 25168663.0
(22) Anmeldetag: 04.04.2025
(51) Int. Cl.: F02C 3/30

(54) **STRÖMUNGSMASCHINE FÜR EINEN FLUGANTRIEB**

(30) Priorität: 09.04.2024 DE 102024109829
(71) Anmelder: MTU Aero Engines AG, 80995 München (DE)
(72) Erfinder: Schuldt, Simon, 80995 München (DE); Bolgar, Istvan, 80995 München (DE); Fois, Milena, 80995 München (DE); Cottier, Francois, 80995 München (DE)

(57) **Zusammenfassung**

Die Erfindung betrifft eine Strömungsmaschine (1) für einen Flugantrieb, aufweisend ein Kerntriebwerk (11) mit einem von einer Gasströmung (S) in einer Strömungsrichtung (R) des Kerntriebwerks (11) durchströmbaren Verdichter (3), Brennraum (4), Turbine (5) und einem der Turbine (5) nachgelagerten Wärmetauscher (8), wobei nach der Turbine (5) eine Strömungsführungseinrichtung (20) angeordnet ist, um die Gasströmung (S) vom Turbinenaustritt (51) radial nach außen zu einem Wärmetauschereintritt (81) zu führen, wobei die Strömungsführungseinrichtung (20) entlang des Wärmetauschers (8) angeordnet ist und einen Strömungskanal (21) definiert.

## Beschreibung

Die Erfindung betrifft eine Strömungsmaschine für einen Flugantrieb, aufweisend ein Kerntriebwerk mit einem von einer Gasströmung in einer Strömungsrichtung durchströmten Verdichter, Brennraum, Turbine und einem der Turbine nachgelagerten Wärmetauscher, wobei nach der Turbine eine Strömungsführungseinrichtung angeordnet ist, um die Gasströmung vom Turbinenaustritt radial nach außen zu einem Wärmetauschereintritt zu führen.

Um die Umweltwirkung des Flugverkehrs zu verbessern, bestehen Bestrebungen bei Antriebsströmungsmaschinen Restwärme zu nutzen. Zusätzlich kann das Medium Wasser bzw. Wasserdampf zur Leistungssteigerung und zur Emissionssenkung zu nutzen. Beispielsweise setzt die "Water-Enhanced Turbofan (WET)"-Technologie auf eine Wassereinspritzung in eine Brennkammer. Hierbei kann in einem stromabwärts einer Triebwerksturbine angeordneten Dampferzeuger mittels Abgasenergie Wasserdampf erzeugt werden, der im Bereich der Brennkammer zugeführt wird. Nach einem Durchströmen des Dampferzeugers kann das feuchte Abgas durch weitere Komponenten geführt werden, die dazu dienen, Wasser aus dem Abgas abzuscheiden. Randbedingungen beim Einsatz solcher WET-Konzepte sind eine effiziente Rückgewinnung des im Abgas vorhandenen Wassers und eine wirkungsgradoptimierte Nutzung der im Abgas der Strömungsmaschine vorhandenen Energie zur Erzeugung von Wasserdampf aus dem rückgewonnenen Wasser. Hierzu kann es beispielsweise sinnvoll sein, die Gasströmung und die darin vorliegende Energie mit möglichst geringen Verlusten zum Dampferzeuger zu führen und eine gleichmäßige Durchströmung des Dampferzeugers zu gewährleisten.

Hiervon ausgehend ist es eine Aufgabe der vorliegenden Erfindung, eine verbesserte Strömungsmaschine für einen Flugantrieb vorzuschlagen, bei welcher insbesondere Restwärme genutzt und ein Wirkungsgrad verbessert werden soll. Dies wird erfindungsgemäß durch die Lehre der unabhängigen Ansprüche erreicht. Vorteilhafte Ausführungen der Erfindung sind Gegenstand der Unteransprüche.

Zur Lösung der Aufgabe wird eine Strömungsmaschine für einen Flugantrieb aufweisend ein Kerntriebwerk mit einem von einer Gasströmung in einer Strömungsrichtung durchströmten Verdichter, Brennraum, Turbine und einem der Turbine nachgelagerten Wärmetauscher vorgeschlagen. Dabei ist nach der Turbine eine Strömungsführungseinrichtung angeordnet, um die Gasströmung vom Turbinenaustritt radial nach außen zu einem Wärmetauschereintritt zu führen, wobei die Strömungsführungseinrichtung entlang des Wärmetauschers angeordnet ist und einen Strömungskanal definiert, dessen Querschnitt sich in Strömungsrichtung zunächst erweitert, so dass die Gasströmung unter einem Winkel zu der Strömungsrichtung in einen Heißgasbereich des Wärmetauschers eintritt. In anderen Worten wirkt die Strömungsführungseinrichtung gleichzeitig als Diffusor und als Umlenkelement für die Strömung.

Hierdurch kann die Gasströmung vom Austritt aus der Turbine bzw. aus einer Niederdruckturbine der Turbine des Kerntriebwerks verlustreduziert zum Wärmetauscher geführt werden. Der Austritt einer Turbine weist typischerweise einen kreisring-förmigen Querschnitt auf, wobei die Strömungsführungseinrichtung vorgesehen ist, diese kreisringförmige Gasströmung radial nach außen zu leiten, insbesondere gleichmäßig über eine axiale Länge des Wärmetauschers bzw. Wärmetauschereintritts, sodass eine gleichmäßige Durchströmung des Wärmetauschers ermöglicht werden kann. Somit kann die Gasströmung radial nach außen und damit unter einem Winkel im Bereich von bis zu 90° zur Strömungsrichtung bzw. einer Rotationsachse der Turbine bzw. des Kerntriebwerks in einen Heißgasbereich des Wärmetauschers eintreten. Abhängig von der Gestaltung des Heißgasbereichs des Wärmetauschers kann es vorteilhaft sein, wenn die Gasströmung in einem vorbestimmten Winkel zur Strömungsrichtung in den Wärmetauscher eintritt. Vorteilhaft ist ein Eintritt der Gasströmung in den Heißgasbereich in einem Winkel von 60° bis 90° und insbesondere von 80° bis 90° zur Strömungsrichtung der Gasströmung am Austritt der Turbine, welche im Wesentlichen der Richtung der Rotationsachse der Strömungsmaschine entspricht.

Der Wärmetauscher weist einen in Gasströmungsrichtung nach dem Wärmetauschereintritt angeordneten Heißgasbereich auf. Der Heißgasbereich dient als Heißseite des Wärmetauschers von welcher aus Wärme auf die Kaltseite übertragen wird. Die Kaltseite ist i.d.R. von der Heißseite getrennt und wird von einem Medium durchströmt, welches Wärme aus dem Heißgasbereich aufnimmt. Dieses Medium könnte in einem ersten Ausführungsbeispiel z.B. Stauluft oder Verdichterzapfluft sein. In einem anderen Ausführungsbeispiel könnte wenigstens ein von Wasser durchströmbarer Strömungskanal vorhanden sein, der von der Gasströmung umströmbar ist, um thermische Energie von der Gasströmung auf das Wasser zu übertragen und dieses so zu verdampfen bzw. den erzeugten Wasserdampf zu überhitzen.

Eine Strömungsmaschine für einen Flugantrieb weist einen Verdichter, einen Brennraum und eine Turbine auf, die das Kerntriebwerk ausbilden. Während des Betriebs der Strömungsmaschine wird Umgebungsluft typischerweise über einen Fan angesaugt und im Verdichter komprimiert, mit Brennstoff vermischt und im Brennraum gezündet, um die Turbine anzutreiben. Die vorgeschlagene Strömungsmaschine weist zudem einen stromabwärts der Turbine angeordneten Wärmetauscher auf, in welchem, insbesondere der Gasströmung bzw. dem Abgas der Strömungsmaschine entzogenes und dem Wärmetauscher bereitgestelltes Wasser mithilfe der Energie der Gasströmung Wasserdampf erzeugt wird. Zudem kann die Strömungsmaschine ein Brennstoffaufbereitungssystem zum Aufbereiten des Brennstoffs vor dessen Verbrennung im Brennraum aufweisen, welche den im Wärmetauscher erzeugten Wasserdampf nutzen kann.

Zur Bereitstellung dieses Wasserdampfs kann die Strömungsmaschine eine Abgasbehandlungseinrichtung aufweisen, die der Turbine nachgelagert angeordnet sein kann und eingerichtet sein kann, in der Gasströmung vorhandenes Wasser zurückzugewinnen. Hierzu kann die Abgasbehandlungseinrichtung den bereits beschriebenen Wärmetauscher, eine Kühleinrichtung und eine Wasserabscheideeinrichtung aufweisen, wobei die Gasströmung den Wärmetauscher, die Kühleinrichtung und die Wasserabscheideeinrichtung nacheinander durchströmen kann. Mittels des Wärmetauschers wird dem Abgas Energie zum Erzeugen von Wasserdampf entzogen, wodurch die Temperatur der Gasströmung sinkt. Die dem Wärmetauscher nachgelagerte Kühleinrichtung ist insbesondere eingerichtet, die Gasströmung weiter abzukühlen, sodass flüssige Wasseranteile in der Abgasströmung vorliegen, welche aus der Abgasströmung abgeschieden werden können. Der flüssige Wasseranteil kann in der Wasserabscheideeinrichtung von der Gasströmung getrennt werden und dem Wärmetauscher bzw. dem Dampferzeuger beispielsweise mittels einer Zuführeinrichtung bereitgestellt werden, um aus dem Wasser Wasserdampf zu erzeugen. Wenigstens ein Teil des im Wärmetauscher erzeugten Wasserdampfs kann mit dem Brennstoff gemischt werden, wobei der Brennstoff verdampft. Dabei kann der Wasserdampf dem Brennstoff bzw. der Gasströmung vor und/ oder im Brennraum zugeführt werden. Damit kann das Wasser in einem Kreislauf gehalten werden, wodurch eine zusätzliche Wasserversorgung für den Verbrennungsprozess entfallen kann.

Der Wärmetauscher übernimmt in einer solchen Strömungsmaschine, welche insbesondere das WET-Konzept nutzt, im Wesentlichen zwei Funktionen: Zum einen wird der Gasströmung Energie entzogen, wodurch die Temperatur der Gasströmung abnimmt, um Wasser aus der Gasströmung rückgewinnen zu können, und zum anderen wird diese Energie genutzt, um das insbesondere der Gasströmung entzogene Wasser zu verdampfen, um dieses der Verbrennung in der Brennkammer bereitstellen zu können.

Die Erfindung beruht unter anderem auf der Idee, einen Stromlinienkörper als Strömungsführungseinrichtung nach der Turbine vorzusehen, um so eine Geometrie für einen Strömungskanal für die Strömung festzulegen. Diese Strömungsführungseinrichtung kann dabei beispielsweise axial zu einem Turbinenaustritt angeordnet sein, um die dort austretende Gasströmung insbesondere in ihrer Strömungsrichtung zu beeinflussen. Durch die sich zunächst erweiternde und anschließend verjüngende Geometrie des Strömungskanals kann ein strömungslenkendes Plenum gelbildet werden, um die Gasströmung dem Wärmetauscher bzw. Verdampfer insbesondere verlustarm zuführen zu können. Hierbei wird insbesondere eine gezielte geometrische Kontur der Strömungsführungseinrichtung vorgesehen, um den Strömungsverlauf günstig beeinflussen zu können.

Innerhalb des durch die Strömungsführungseinrichtung zum Wärmetauscher gebildeten Strömungskanals kann wenigstens ein Teil der Gasströmung entlang der Kontur der Strömungsführungseinrichtung strömen und durch diese in ihrer Strömungsrichtung beeinflusst bzw. gelenkt werden. Hierdurch wird insbesondere ermöglicht, die Gasströmung von ihrer ursprünglichen axialen Strömungsrichtung abzulenken und dem Wärmetauscher in einer radialen Richtung zuzuführen. Zudem kann durch die mittels der Strömungsführungseinrichtung ermöglichte Strömungslenkung bzw. -führung thermische Verluste und/ oder Druckverluste in der Gasströmung zwischen Turbine(naustritt) und Wärmetauscher(eintritt) reduziert werden, um so eine Dampferzeugung bzw. eine Überhitzung des im Wärmetauscher erzeugten Wasserdampfs effizienter auszubilden.

Bei einer Ausführungsform weist die Strömungsführungseinrichtung wenigstens eine konkave Gasleitfläche auf. Die Gasleitfläche ist dabei insbesondere an einer dem Wärmetauscher zugewandten Seite der Strömungsführungseinrichtung angeordnet und kann sich beispielsweise vom Turbinenaustritt bis zu einem axialen Ende der Strömungsführungseinrichtung und/ oder des Wärmetauschers bzw. dessen Eintrittsbereich erstrecken. Die Strömungsführungseinrichtung kann so ausgebildet sein, dass sie ihren Querschnitt in Strömungsrichtung zunächst verkleinert und insbesondere in einem Endbereich des Strömungskanals derart vergrößern, dass der Strömungskanal durch die Strömungsführungseinrichtung axial begrenzt ist, wobei die Strömungsführungseinrichtung radial an den Wärmetauscher bzw. dessen Eintrittsbereich angrenzen kann. Hierdurch können insbesondere über den gesamten Verlauf der Strömungsführungseinrichtung bzw. des Strömungskanals Massenstromanteile der Gasströmung umgelenkt werden, um radial und damit unter einem Winkel zur Strömungsrichtung in den Wärmetauscher eintreten zu können. Bei anderen Ausführungsformen kann eine solche konkave Gasleitfläche einen axialen Teilbereich der Strömungsführungseinrichtung ausbilden.

Bei einer Ausführungsform bildet die Strömungsführungseinrichtung ein einschaliges Hyperboloid aus. Ein solches Hyperboloid ist typischerweise eine Fläche, die durch eine vollständige Rotation einer Hyperbel um eine ihrer Achsen ausgebildet ist. Hierbei kann das Hyperboloid insbesondere axial asymmetrisch ausgebildet sein, wobei eine Krümmung im Eintrittsbereich des Strömungskanals bzw. stromaufwärts der Gasströmung kleiner ausgebildet sein kann als in einem Endbereich des Strömungskanals bzw. in einem stromabwärtigen Bereich der Strömungsführungseinrichtung. Hierdurch kann eine verlustarme Strömungslenkung, insbesondere über die gesamte axiale Länge der Strömungsführungseinrichtung, erreicht werden.

Bei einer Ausführungsform bildet die Strömungsführungseinrichtung einen sich in Strömungsrichtung aufweitenden Konusbereich aus. Hierbei kann die Strömungsführungseinrichtung im Konusbereich eine wenigstens abschnittsweise konkave und/ oder konvexe Krümmung aufweisen. Insbesondere im Eintrittsbereich des Strömungskanals und/ oder im Endbereich des Strömungskanals, kann eine konkave Krümmung der Strömungsführungseinrichtung vorgesehen sein, wobei diese(r) konkave (n) Bereich(e), insbesondere jeweils, an den Konusbereich angrenzen kann/ können. Durch eine sich in Strömungsrichtung aufweitende Geometrie kann die Strömungsgeschwindigkeit der Gasströmung bzw. des Gasmassenstroms in dem Strömungskanal konstant gehalten werden. Zudem kann die Gasströmung durch eine Aufweitung im Konusbereich radial nach außen geleitet werden, um in den Wärmetauschereintritt und den Heißgasbereich des Wärmetauschers einzutreten.

Bei einer Ausführungsform mit sich aufweitendem Konusbereich kann radial innerhalb der Strömungsführungseinrichtung ein Innenraum ausgebildet sein, welcher beispielsweise für eine Platzierung bzw. Anordnung wenigstens einer weiteren Komponente und/ oder eines weiteren Systems der Strömungsmaschine und/ oder des Flugzeugantriebs dienen kann.

Bei einer Ausführungsform weist die Strömungsführungseinrichtung wenigstens ein Gasleitelement auf. Hierbei kann das Gasleitelement rotationssymmetrisch ausgebildet sein, beispielsweise als sich in Strömungsrichtung insbesondere trompetenartig erweiternde Rohrgeometrie, welche an ihrer radialen Außenseite eine Gasleitfläche aufweist. In anderen Ausführungsformen kann ein Gasleitelement beispielsweise als Segment einer solchen Rohrgeometrie oder als wenigstens abschnittsweise konkav ausgebildete Fläche ausgebildet sein, die im Strömungskanal angeordnet ist. Hierdurch kann eine zusätzliche Richtungsgebung für die Gasströmung erreicht werden, um diese dem Wärmetauscher bzw. dem Heißgasbereich unter einem Winkel zur Strömungsrichtung der Strömungsmaschine zuführen zu können. Insbesondere können mehrere solche Gasleitelemente gleichmäßig oder unterschiedlich zueinander beabstandet, insbesondere parallel zueinander, an der Strömungsführungseinrichtung angeordnet bzw. befestigt sein, um eine zusätzliche Strömungsführung der Gasströmung zu ermöglichen.

Bei einer Ausführungsform weist das wenigstens eine Gasleitelement eine konkave Gasleitfläche auf. Dabei kann die Gasleitfläche an einem äußeren Umfang eines insbesondere rotationssymmetrischen und im Wesentlichen konisch ausgebildeten Gasleitelements ausgebildet sein. Hierbei kann die Gasleitfläche im Querschnitt beispielsweise als Kreisbogensegment ausgebildet sein, insbesondere als Kreisbogensegment mit einem Scheitelwinkel von 90°. Dabei kann ein dem Turbinenaustritt zugewandtes Ende der Gasleitfläche im Wesentlichen parallel zur Strömungsrichtung der Turbine ausgerichtet sein und ein dem Turbinenaustritt abgewandtes Ende der Gasleitfläche radial außen, insbesondere in einem Winkel bis zu 90° zu der initialen Strömungsrichtung ausgerichtet sein, um die Gasströmung zu einem insbesondere radial außen angeordneten Wärmetauscher führen zu können.

Bei einer Ausführungsform ist das wenigstens eine Gasleitelement koaxial zu der Gasleitfläche der Strömungsführungseinrichtung angeordnet. Hierbei kann das Gasleitelement unmittelbar an der Gasleitfläche der Strömungsführungseinrichtung oder auch beabstandet zu dieser angeordnet sein und/ oder diese insbesondere beabstandet umschließen. Beispielsweise kann ein Gasleitelement auch wenigstens eine Aussparung aufweisen, welche eine Durchströmungsöffnung definiert, so dass ein Zwischenraum zwischen dem jeweiligen Gasleitelement und der Strömungsführungseinrichtung und/ oder die wenigstens eine Aussparung von der Gasströmung durchströmbar ist. Hierdurch kann der Gasstrom definiert geführt werden, so dass eine insbesondere gleichmäßige Strömungsführung über den gesamten Querschnitt und/ oder eine gesamte Länge des Strömungskanals erzielbar ist.

Bei einer Ausführungsform weist die Strömungsführungseinrichtung mehrere Gasleitelemente auf, die in Strömungsrichtung jeweils vergrößerte Gasleitflächen ausbilden. Hierbei kann eine Geometrie, eine radiale Abmessung, ein Abstand und/ oder ein Krümmungsradius eines einzelnen Gasleitelements derart ausgebildet sein und/ oder mehrere Gasleitelemente derart aufeinander abgestimmt ausgebildet sein, dass jedes der Gasleitelemente einen vorbestimmten, beispielsweise im Wesentlichen gleichen Massenstromanteil aus der Gasströmung abzweigen kann, um diesen um einen Winkel nach radial außen abzulenken und so dem Wärmetauscher zuzuführen. Hierdurch kann eine gewünschte, beispielsweise gleichmäßige Zuleitung der Gasströmung zum Wärmetauscher über dessen axiale Länge ermöglicht werden.

Bei einer Ausführungsform ist die Strömungsführungseinrichtung rotationssymmetrisch ausgebildet. Dabei kann die Gasströmung beispielsweise an der Außen- bzw. Umfangsseite der Strömungsführungseinrichtung entlang strömen, um von der ursprünglichen axialen Strömungsrichtung abgelenkt und unter einem Winkel radial außen in den Wärmetauscher bzw. dessen Heißgasbereich eintreten zu können. Hierbei kann sich die Strömungsführungseinrichtung insbesondere rotationssymmetrisch um die Rotationsachse der Strömungsmaschine erstrecken, wodurch eine in Umfangsrichtung gleichmäßig ausgebildete Strömung für den insbesondere kreisringförmig ausgebildeten Querschnitt der Gasströmung erreicht werden kann.

Bei einer Ausführungsform ist der Wärmetauscher und/ oder der Heißgasbereich des Wärmetauschers wenigstens abschnittsweise rotationssymmetrisch ausgebildet. Hierbei kann der Eintrittsbereich des Wärmetauschers kreisförmig ausgebildet sein und insbesondere der Heißgasbereich des Wärmetauschers einen im Wesentlichen kreisringförmigen Querschnitt aufweisen, der koaxial zu dem Strömungskanal angeordnet ist bzw. diesen in Umfangsrichtung umschließt bzw. abschnittsweise umschließt. Hierdurch kann der Verdampfer bzw. Wärmetauscher den Turbinenaustritt bzw. den hieraus austretenden Gasstrom radial umgeben bzw. umschließen, um den Strömungskanal auszubilden. Hierdurch kann insbesondere durch die Vermeidung (um)leitungsbedingter Verluste eine strömungsgünstige und verlustarme Gasströmungsführung ermöglicht werden.

Bei einer Ausführungsform ist der Wärmetauscher bzw. der Heißgasbereich des Wärmetauschers planar ausgebildet. Hierbei können ein oder mehrere planar ausgebildete Wärmetauscher radial um den austretenden Gasstrom angeordnet sein und eine oder mehrere Strömungsführungseinrichtungen einen oder mehrere Strömungskanäle ausbilden, welche insbesondere kreisringsegmentförmige Querschnitte aufweisen können. So kann eine im Querschnitt kreis(ring)segmentförmig ausgebildete Strömungsführungseinrichtung beispielsweise einem planar ausgebildeten Wärmetauscher zugeordnet sein, um diesen einen kreis(ring)segmentförmigen Anteil der aus der Turbine austretenden Gasströmung zuzuleiten. Als planare Ausgestaltung ist auch eine Ausgestaltung zu verstehen, deren der Gasströmung zugewandter Eingangsbereich eine insbesondere strömungsgünstig geformte bzw. gekrümmte Gestaltung aufweist.

Bei einer Ausführungsform ist die Strömungsführungseinrichtung am Wärmetauscher ausgebildet. Entsprechend bildet die Strömungsführungseinrichtung einen Teils des Wärmetauschers. Hierdurch kann eine Strömungsführung zwischen der Strömungsführungseinrichtung und dem Wärmetauscher verbessert sein, da die Strömungsführungseinrichtung unmittelbar an den Wärmetauscher angepasst ausgebildet und so Wärmetauscher und Strömungsführungseinrichtung aufeinander abgestimmte Geometrien und/ oder Querschnitte aufweisen können. Zudem kann ein Ende des Strömungskanals durch eine Verbindung zwischen Strömungsführungseinrichtung und Wärmetauscher verschlossen sein, um hierdurch eine Strömungsführung zu verbessern. **In** einigen Ausführungsformen kann wenigstens eine Strömungsführungseinrichtung am Turbinenaustritt angeordnet sein, wodurch eine Geometrie eines Wärmetauschers frei an den zur Verfügung stehenden Bauraum angepasst werden kann.

Gemäß einem weiteren Aspekt wird ein Verfahren zum Betreiben einer Strömungsmaschine für einen Flugantrieb vorgeschlagen, aufweisend ein Kerntriebwerk mit einem von einer Gasströmung in einer Strömungsrichtung des Kerntriebwerks durchströmbaren Verdichter, Brennraum, Turbine und einem der Turbine nachgelagerten Wärmetauscher, wobei nach der Turbine eine Strömungsführungseinrichtung angeordnet ist, welche entlang des Wärmetauschers einen Strömungskanal definiert, dessen Querschnitt sich in Strömungsrichtung zunächst erweitert und dann verringert, so dass die Gasströmung unter einem Winkel zu der Strömungsrichtung in einen Heißgasbereich des Wärmetauschers eintritt, aufweisend Schritte des Durchströmens des Kerntriebwerks mit der Gasströmung, des Umlenkens der Gasströmung mittels der Strömungsführungseinrichtung, und des Durchströmens des Wärmetauschers durch die Gasströmung. Hierdurch können die in Rahmen der vorliegenden Beschreibung angegebenen Effekte und Vorteile genutzt werden.

Weitere Merkmale, Vorteile und Anwendungsmöglichkeiten der Offenbarung ergeben sich aus der nachfolgenden Beschreibung im Zusammenhang mit den Figuren. Im Allgemeinen gilt, dass Merkmale der verschiedenen hierin beschriebenen beispielhaften Aspekte und/oder Ausführungsformen miteinander kombiniert werden können, sofern dies im Zusammenhang mit der Offenbarung nicht eindeutig ausgeschlossen ist.

Im folgenden Teil der Beschreibung wird auf die Figuren Bezug genommen, die zur Veranschaulichung spezifischer Aspekte und Ausführungsformen der vorliegenden Offenbarung gezeigt sind. Es versteht sich, dass andere Aspekte verwendet werden können und strukturelle oder logische Änderungen der illustrierten Ausführungsformen möglich sind, ohne den Umfang der vorliegenden Offenbarung zu verlassen. Die folgende Beschreibung der Figuren ist daher nicht einschränkend zu verstehen. Es zeigt
- Fig. 1: eine schematische Darstellung einer beispielhaften erfindungsgemäßen Strömungsmaschine für einen Flugantrieb;
- Fig. 2: eine schematische Darstellung eines ersten Ausführungsbeispiels eines Wärmetauschers und einer Strömungsführungseinrichtung einer Strömungsmaschine gemäß einem Ausführungsbeispiel der vorliegenden Offenbarung;
- Fig. 2a und 2b: jeweils eine schematische Darstellung eines zweiten Ausführungsbeispiels eines Wärmetauschers und einer Strömungsführungseinrichtung einer Strömungsmaschine gemäß einem Ausführungsbeispiel der vorliegenden Offenbarung;
- Fig. 3: eine schematische Darstellung eines dritten Ausführungsbeispiels eines Wärmetauschers und einer Strömungsführungseinrichtung einer Strömungsmaschine gemäß einem Ausführungsbeispiel der vorliegenden Offenbarung;
- Fig. 4: eine schematische Darstellung eines vierten Ausführungsbeispiels eines Wärmetauschers und einer Strömungsführungseinrichtung einer Strömungsmaschine gemäß einem Ausführungsbeispiel der vorliegenden Offenbarung; und
- Fig. 5: ein schematisches Ablaufdiagramm eines Verfahrens zum Betreiben einer Strömungsmaschine gemäß einem Ausführungsbeispiel der vorliegenden Offenbarung.

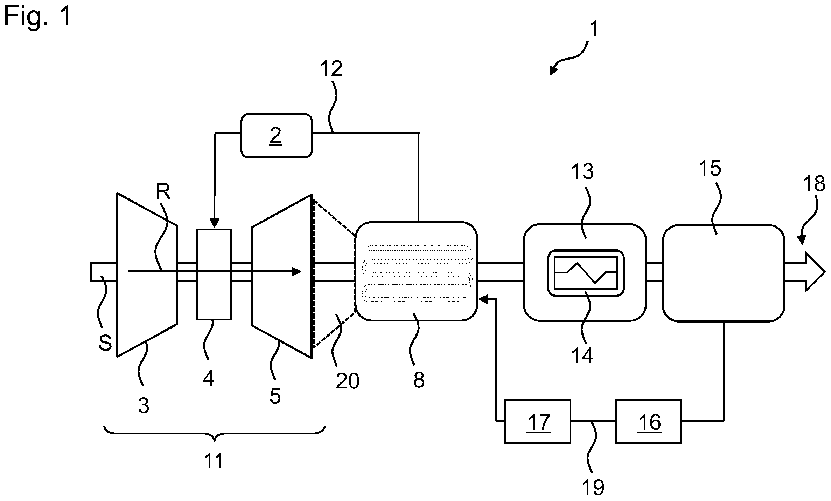

**Fig.** 1 zeigt eine beispielhafte erfindungsgemäße Strömungsmaschine 1 für einen Flugantrieb in einer schematischen Darstellung.

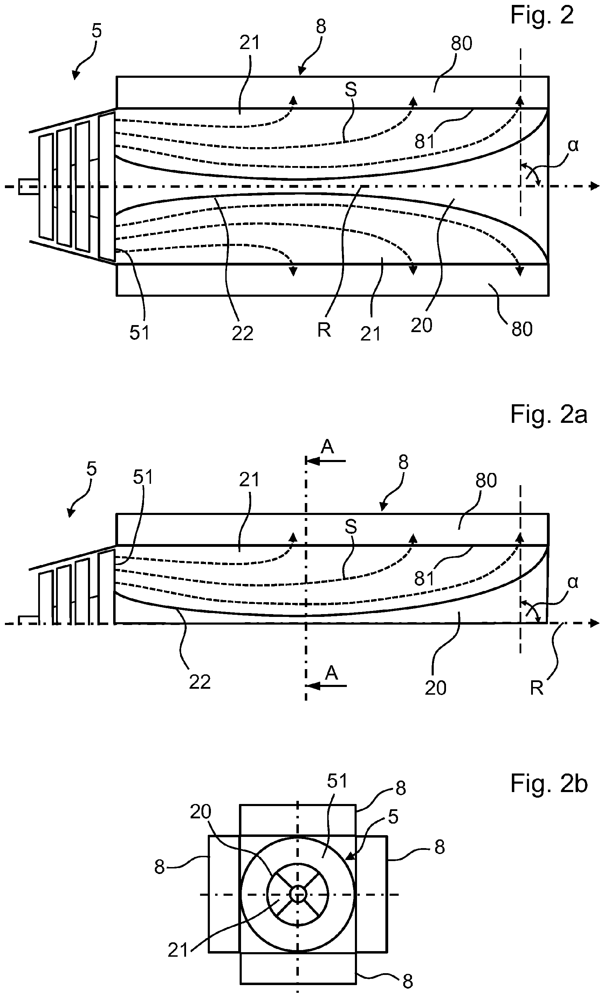

Die Strömungsmaschine 1 weist beispielhaft ein Kerntriebwerk 11 mit einen Verdichter 3, einen Brennraum 4 und eine Turbine 5 auf, die von einer Gasströmung S in einer Strömungsrichtung R der Strömungsmaschine 1 durchströmbar sind bzw. in einem Betrieb der Strömungsmaschine 1 von der Gasströmung S durchströmt werden. Der Turbine 5 in der Strömungsrichtung R nachgelagert weist die Strömungsmaschine 1 einen Wärmetauscher 8 auf, der eingerichtet ist, aus einem Wasser mittels einer Energie der Gasströmung S Wasserdampf zu erzeugen. Dabei ist nach der Turbine 5 eine Strömungsführungseinrichtung 20 angeordnet, die eingerichtet ist, die Gasströmung S vom Turbinenaustritt radial nach außen zu einem Wärmetauschereintritt des Wärmetauschers 8 zu führen. Die gezeigte schematische Repräsentation zeigt nicht die konkrete geometrische Anordnung, sondern soll lediglich die Funktionsweise der Strömungsmaschine als Ganzes darstellen. Die Strömungsführungseinrichtung 20 sowie der Wärmetauscher 8 werden nachfolgend im Zusammenhang mit den Figuren Fig. 2 bis 5 näher beschrieben.

Der mittels des Wärmetauschers 8 erzeugte Wasserdampf kann über eine Dampfzuführung 12 insbesondere zusammen mit einem Brennstoff in die Gasströmung S zum Verbrennen im Brennraum 4 zugeführt werden. Die Dampfzuführung 12 kann eine Mischkammer 2 einer Brennstoffaufbereitungseinrichtung aufweisen, in welche Brennstoff eingebracht und damit dem durch die Mischkammer 2 geführten Wasserdampf zugeführt werden kann, wobei der Brennstoff verdampfen kann. In anderen Ausführungsformen kann der Wasserdampf auch vor und/ oder im Brennraum 4 dem Brennstoff bzw. der Gasströmung S zugeführt werden.

Bezogen auf eine mittels eines Pfeils illustrierte globale Strömungsrichtung R der Gasströmung S insbesondere im Kerntriebwerk 11, kann die Gasströmung S nach dem Wärmetauscher 8 durch eine Kühleinrichtung 13 und eine Wasserabscheideeinrichtung 15 geführt werden, welche dem Wärmetauscher nachgelagert angeordnet sind.

Die Kühleinrichtung 13 ist eingerichtet, die Gasströmung zu kühlen, um ein Abscheiden des in der Gasströmung S enthaltenen Wassers zu ermöglichen. Der Kühleinrichtung 13 nachgelagert ist in dem vorliegenden Ausführungsbeispiel eine Wasserabscheideeinrichtung 15 angeordnet, um das Wasser aus der Gasströmung abzuscheiden und zu sammeln. Die verbleibende Gasströmung S kann die Strömungsmaschine 1 über einen Auslass 18 verlassen und insbesondere an die Umgebung abgegeben werden.

Das abgeschiedene Wasser kann beispielsweise über ein optional vorhandenes Wasseraufbereitungssystem 16 in einen Wasserspeicher 17 geführt werden, wo es für eine weitere Verwendung zur Verfügung stehen kann. Mittels einer Zuführeinrichtung 19 kann das Wasser dem Wärmetauscher 8 bereitgestellt werden, um dort mit Hilfe von Energie der Gasströmung S Wasserdampf zu erzeugen, der im Bereich des Brennraums 4 der Gasströmung S zugeführt werden kann.

Fig. 2 zeigt eine schematische Schnittdarstellung eines ersten Ausführungsbeispiels eines Wärmetauschers 8 und einer Strömungsführungseinrichtung 20 wie sie in einer Strömungsmaschine 1 der Fig.1 vorgesehen sein kann.

In Fig. 2 ist ein Abschnitt der Turbine 5 und der Wärmetauscher 8 der Strömungsmaschine 1 in einer Schnittdarstellung entlang der Rotationsachse der Strömungsmaschine 1 bzw. des Kerntriebwerks 11 dargestellt. In Strömungsrichtung R nach der Turbine 5 ist die Strömungsführungseinrichtung 20 angeordnet, um die Gasströmung S vom Turbinenaustritt 51 radial nach außen zu einem Wärmetauschereintritt 81 zu führen. Dabei ist in dem dargestellten Ausführungsbeispiel sowohl der Wärmetauscher 8 als auch die Strömungsführungseinrichtung 20 rotationsymmetrisch ausgebildet und koaxial zur Rotationsachse der Turbine 5 bzw. der Strömungsmaschine 1 angeordnet.

Die Strömungsführungseinrichtung 20 ist derart ausgebildet und angeordnet, dass sie entlang des und zusammen mit dem Wärmetauscher(s) 8 einen Strömungskanal 21 definiert, dessen Querschnitt sich in Strömungsrichtung R zunächst erweitert und dann verringert, so dass die Gasströmung S radial nach außen geführt wird und unter einem Winkel α zu der Strömungsrichtung R in einen Heißgasbereich 80 des Wärmetauschers 8 eintritt. Dabei kann der Winkel α bis zu 90° zur Strömungsrichtung R betragen, wobei die Gasströmung S bei α = 90° im Wesentlichen senkrecht zu der Strömungsrichtung R in den Wärmetauscher 8 eintreten kann.

Die Strömungsführungseinrichtung 20 bildet in dem dargestellten Ausführungsbeispiel ein einschaliges Hyperboloid aus, wodurch die Strömungsführungseinrichtung 20 eine konkav gekrümmte Gasleitfläche 22 aufweist, um die Gasströmung radial nach außen in Richtung des Wärmetauschers 8 zu leiten. Bei der beispielhaften Ausführungsform weist die Gasleitfläche 22 in einem benachbart zum Turbinenaustritt und damit benachbart zum Eintritt der Gasströmung in die Strömungsführungseinrichtung 20 einen kleineren Krümmungsradius auf, als in einem nachfolgenden Bereich, um die Gasströmung S möglichst gleichförmig über den axialen Verlauf des Wärmetauschers 8 in diesen einzuleiten.

Fig. 2a zeigt eine schematische Schnittdarstellung eines zweiten Ausführungsbeispiels eines Wärmetauschers 8 und einer Strömungsführungseinrichtung 20 wie sie in einer Strömungsmaschine 1 der Fig. 1 vorgesehen sein kann. Der Wärmetauscher 8 des zweiten Ausführungsbeispiels bzw. insbesondere der Wärmetauschereintritt 81 des Wärmetauschers 8 ist dabei planar ausgeführt.

Hierbei kann ein oder mehrere planar ausgebildete(r) Wärmetauscher 8 radial beabstandet zu einer Rotationsachse der Strömungsmaschine angeordnet sein, wobei die Strömungsführungseinrichtung 20 eingerichtet ist, die Gasströmung S bzw. einen Teil der Gasströmung S radial nach außen und unter einem Winkel α zu dem bzw. den Wärmetauscher(n) zu leiten. Die (einzelne) Strömungsführungseinrichtung 20 kann dabei eingerichtet und derart an der Turbine 5 bzw. dem Turbinenaustritt 51 angeordnet sein, dass sie einen insbesondere vorbestimmten Anteil der gesamten aus der Turbine 5 austretenden Gasströmung S aufnehmen kann, um diesen zu dem jeweiligen Wärmetauscher 8 zu führen. Hierbei können mehrere Strömungsführungseinrichtungen 20 wenigstens teilweise in Umfangsrichtung aneinander angrenzend angeordnet sein.

Fig. 2b zeigt eine weitere schematische Schnittdarstellung des zweiten Ausführungsbeispiels des Wärmetauschers 8 und der Strömungsführungseinrichtung 20 aus Fig. 2a im Schnitt entlang der Schnittlinie AA aus Fig. 2a.

Dargestellt sind vier gleichmäßig verteilt um die Rotationsachse der Strömungsmaschine 1 angeordnete Wärmetauscher 8, die jeweils zusammen mit einer Strömungsführungseinrichtung 20 einen Strömungskanal 21 ausbilden, dessen Querschnitt sich in Strömungsrichtung R zunächst erweitert und dann verringert, um den jeweiligen Anteil der Gasströmung S unter einem Winkel α dem Wärmetauscher 8 zuzuführen.

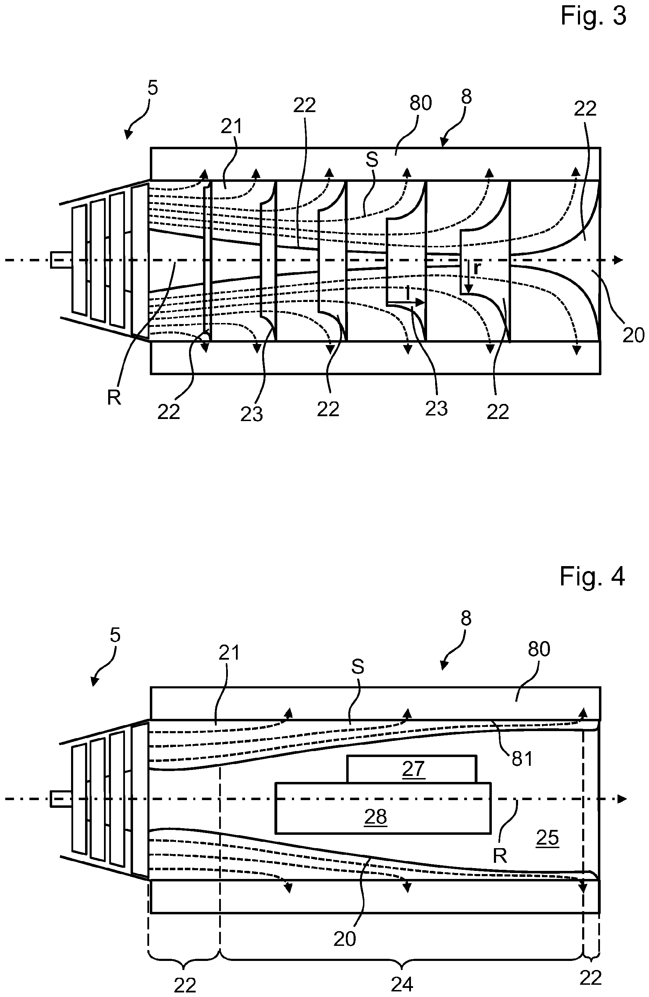

Fig. 3 zeigt eine schematische Schnittdarstellung eines zweiten Ausführungsbeispiels eines Wärmetauschers 8 und einer Strömungsführungseinrichtung 20 wie sie in einer

Strömungsmaschine 1 der Fig. 1 vorgesehen sein kann. Die Darstellung der Fig. 3 entspricht in Wesentlichen Teilen der Darstellung der Fig. 2, weshalb im Folgenden lediglich auf die Unterschiede eingegangen wird.

In dem zwischen der Strömungsführungseinrichtung 20 und dem Wärmetauscher 8 ausgebildeten Strömungskanal ist eine Mehrzahl an Gasleitelementen 23 angeordnet, die in Strömungsrichtung R jeweils vergrößerte Gasleitflächen 22 ausbilden. Auch diese Gasleitflächen 22 sind konkav ausgebildet, wobei die Gasleitelemente 23 in ihrer relativen Anordnung zueinander, ihren Durchflussradien r, ihren axialen Längen l und/ oder den Krümmungsradien der Gasleitflächen 22 insbesondere derart ausgebildet sind, dass jedes der Gasleitelemente 23 einen Anteil der Gasströmung S unter einem Winkel α zu der Strömungsrichtung R in einen Heißgasbereich 80 des Wärmetauschers 8 leiten kann.

Solche Gasleitelemente 23 können beispielsweise auch in Ausführungsbeispielen zum Einsatz kommen, die einen planar ausgebildeten Wärmetauscher 8 aufweisen.

Fig. 4 zeigt eine schematische Schnittdarstellung eines vierten Ausführungsbeispiels eines Wärmetauschers 8 und einer Strömungsführungseinrichtung 20 wie sie in einer Strömungsmaschine 1 der Fig.1 vorgesehen sein kann. Die Darstellung der Fig. 4 entspricht in wesentlichen Teilen der Darstellung der Fig. 2 bzw. Fig. 3, weshalb im Folgenden lediglich auf die Unterschiede eingegangen wird.

In dem dargestellten Ausführungsbeispiel bildet die Strömungsführungseinrichtung 20 einen sich in Strömungsrichtung R zunächst erweiternden und dann verringernden Querschnitt für den Strömungskanal 21 aus. Anschließend an diese konkave Krümmung der Gasleitfläche 22 der Strömungsführungseinrichtung 20 bildet die Strömungsführungseinrichtung 20 einen sich in Strömungsrichtung R aufweitenden Konusbereich 24 aus, wobei dieser in dem dargestellten Ausführungsbeispiel eine konvexe Krümmung aufweist. In dem stromabwärtigen Endbereich des Strömungskanals 21 schließt sich eine weitere konkave Krümmung 22 der Strömungsführungseinrichtung 20 an den Konusbereich 24 an, welche schließlich am inneren Umfang des Wärmetauschers 8 endet. Durch die Aufweitung des Konusbereichs 24 wird die Gasströmung radial nach außen geleitet, um in den Wärmetauschereintritt 81 einzutreten. Eine entsprechende Gestaltung der Strömungsführungseinrichtung 20 ist in anderen Ausführungsbeispielen ebenso in Verbindung mit einem planar ausgebildeten Heißgasbereich 80 des Wärmetauschers 8 möglich. Bei dieser Ausführungsform ist innerhalb der Strömungsführungseinrichtung 20 bzw. dessen sich aufweitenden Konusbereichs 24 ein Innenraum 25 ausgebildet, in welchem weitere Komponenten 27 und/ oder weiterer Systeme 28 der Strömungsmaschine 1 anordenbar sind.

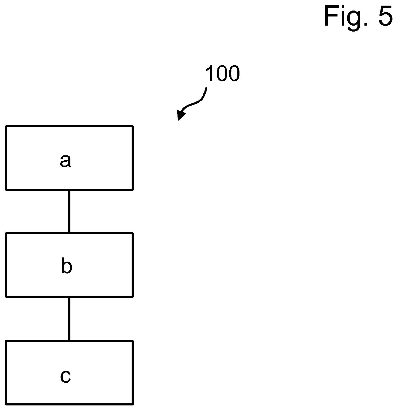

Fig. 5 zeigt ein beispielhaftes Ablaufdiagramm eines erfindungsgemäßen Verfahrens 100 zum Betreiben einer Strömungsmaschine 1 für den Flugantrieb aus Fig.1 in einer schematischen Darstellung.

In einem ersten Schritt a wird das Kerntriebwerk 11 mit der Gasströmung S durchströmt. Hierbei wird die Gasströmung S üblicherweise mittels eines Fans aus der Umgebung angesaugt und durchströmt nacheinander den Verdichter 3, die Brennkammer 4 und die Turbine 5. In einem weiteren Schritt b wird die Gasströmung S mittels der Strömungsführungseinrichtung 20 umgelenkt. Hierzu bildet die Strömungsführungseinrichtung 20 zusammen mit dem Wärmetauscher 8 den Strömungskanal 21 aus, in welchen die Gasströmung S vom Turbinenaustritt 51 einströmt und in diesem radial nach außen umgelenkt wird. In einem Schritt c wird der Wärmetauscher 8 mit der Gasströmung S durchströmt, um Energie an durch den Wärmetauscher 8 geführtes Wasser abzugeben, um Wasserdampf zu erzeugen und/ oder einen Wasserdampf zu überhitzen.

### BEZUGSZEICHENLISTE

- 1: Strömungsmaschine
- 2: Mischkammer
- 3: Verdichter
- 4: Brennkammer
- 5: Turbine
- 8: Wärmetauscher
- 11: Kerntriebwerk
- 12: Dampfzuführung
- 13: Kühleinrichtung
- 14: Kondensator
- 15: Wasserabscheideeinrichtung
- 16: Wasseraufbereitungssystem
- 17: Wasserspeicher
- 18: Auslass
- 19: Zuführeinrichtung
- 20: Strömungsführungseinrichtung
- 21: Strömungskanal
- 22: Gasleitfläche
- 23: Gasleitelement
- 24: Konusbereich
- 25: Innenraum der Strömungsführungseinrichtung
- 27: Komponente der Strömungsmaschine
- 28: System der Strömungsmaschine
- 51: Turbinenaustritt
- 80: Heißgasbereich
- 81: Wärmetauschereintritt
- R: Strömungsrichtung der Strömungsmaschine/ des Kerntriebwerks
- S: Gasströmung
- α: Winkel
- r: Durchflussradius des Gasleitelements
- l: axiale Länge des Gasleitelements

## Patentansprüche

1. Strömungsmaschine (1) für einen Flugantrieb, aufweisend ein Kerntriebwerk (11) mit einem von einer Gasströmung (S) in einer Strömungsrichtung (R) des Kerntriebwerks (11) durchströmbaren Verdichter (3), Brennraum (4), Turbine (5) und einem der Turbine (5) nachgelagerten Wärmetauscher (8), wobei nach der Turbine (5) eine Strömungsführungseinrichtung (20) angeordnet ist, um die Gasströmung (S) vom Turbinenaustritt (51) radial nach außen zu einem Wärmetauschereintritt (81) zu führen, wobei die Strömungsführungseinrichtung (20) entlang des Wärmetauschers (8) angeordnet ist und einen Strömungskanal (21) definiert, dessen Querschnitt sich in Strömungsrichtung (R) erweitert und der derart ausgebildet ist, dass die Gasströmung (S) unter einem Winkel (α) zu der Strömungsrichtung (R) in einen Heißgasbereich (80) des Wärmetauschers (8) eintritt.

2. Strömungsmaschine (1) nach Anspruch 1, wobei die Strömungsführungseinrichtung (20) wenigstens eine konkave Gasleitfläche (22) aufweist.

3. Strömungsmaschine (1) nach Anspruch 1 oder 2, wobei Strömungsführungseinrichtung (20) ein einschaliges Hyperboloid ausbildet.

4. Strömungsmaschine (1) nach Anspruch 1 oder 2, wobei die Strömungsführungseinrichtung (20) einen sich in Strömungsrichtung (R) aufweitenden Konusbereich (24) ausbildet.

5. Strömungsmaschine (1) nach wenigstens einem der vorhergehenden Ansprüche, wobei die Strömungsführungseinrichtung (20) wenigstens ein Gasleitelement (23) aufweist.

6. Strömungsmaschine (1) nach Anspruch 5, wobei das wenigstens eine Gasleitelement (23) eine konkave Gasleitfläche (22) aufweist.

7. Strömungsmaschine (1) nach Anspruch 5 oder 6, wobei das wenigstens eine Gasleitelement (23) koaxial zu der Gasleitfläche (22) der Strömungsführungseinrichtung (20) angeordnet ist.

8. Strömungsmaschine (1) nach wenigstens einem der vorhergehenden Ansprüche, wobei die Strömungsführungseinrichtung (20) mehrere Gasleitelemente (23) aufweist, die in Strömungsrichtung (R) jeweils vergrößerte Gasleitflächen (22) ausbilden.

9. Strömungsmaschine (1) nach wenigstens einem der vorhergehenden Ansprüche, wobei die Strömungsführungseinrichtung (20) rotationssymmetrisch ausgebildet ist.

10. Strömungsmaschine (1) nach wenigstens einem der vorhergehenden Ansprüche, wobei der Wärmetauscher (8) und/ oder der Heißgasbereich (80) des Wärmetauschers (8) wenigstens abschnittsweise rotationssymmetrisch ausgebildet ist.

11. Strömungsmaschine (1) nach wenigstens einem der Ansprüche 1 bis 9, wobei der Wärmetauscher (8) und/ oder der Heißgasbereich (80) des Wärmetauschers (8) planar ausgebildet ist.

12. Strömungsmaschine (1) nach wenigstens einem der vorhergehenden Ansprüche, wobei die Strömungsführungseinrichtung (20) am Wärmetauscher (8) ausgebildet ist.

13. Verfahren zum Betreiben einer Strömungsmaschine (1) für einen Flugantrieb, aufweisend ein Kerntriebwerk (11) mit einem von einer Gasströmung in einer Strömungsrichtung (R) des Kerntriebwerks (11) durchströmbaren Verdichter (3), Brennraum (4), Turbine (5) und einem der Turbine (5) nachgelagerten Wärmetauscher (8), wobei nach der Turbine (5) eine Strömungsführungseinrichtung (20) angeordnet ist, um die Gasströmung (S) vom Turbinenaustritt (51) radial nach außen zu einem Wärmetauschereintritt (81) zu führen, wobei die Strömungsführungseinrichtung (20) entlang des Wärmetauschers (8) angeordnet ist und einen Strömungskanal (21) definiert, dessen Querschnitt sich in Strömungsrichtung (R) zunächst erweitert und dann verringert, so dass die Gasströmung (S) unter einem Winkel (α) zu der Strömungsrichtung (R) in einen Heißgasbereich (80) des Wärmetauschers (8) eintritt, aufweisend die folgenden Schritte:
a) Durchströmen des Kerntriebwerks (11) mit der Gasströmung (S),
b) Umlenken der Gasströmung (S) mittels der Strömungsführungseinrichtung (20),
c) Durchströmen des Wärmetauschers (8) durch die Gasströmung (S).
